# EUROPEAN PATENT SPECIFICATION

(11) **EP 0 506 215 B1**
(45) Date of publication and mention of the grant of the patent: **10.01.1996**
(21) Application number: 92250043.4
(22) Date of filing: 27.02.1992
(51) Int. Cl.: F16K 31/60

(54) **Valve stem length adjustment device**
Vorrichtung zum Einstellen der Spindellänge
Dispositif d'ajustage pour la longueur du tige

(30) Priority: 28.03.1991 FI 911556
(43) Date of publication of application: 30.09.1992
(73) Proprietor: ORAS OY, SF-26100 Rauma10 (FI)
(72) Inventor: Jäpölä, Jari, SF-27100 Eurajoki (FI); Saarisalo, Risto Antero, SF-27230 Lappi TL (FI)
(74) Representative: UEXKÜLL & STOLBERG

(56) References cited:
- EP-A- 0 121 219
- AT-B- 331 085
- AU-B- 516 939
- DE-C- 2 757 315
- DE-U- 1 994 901
- DE-U- 7 931 979
- US-A- 4 165 659
- US-A- 4 708 318

## Description

The present invention relates to a valve stem adjustment device suitable for setting the valve handle to a predetermined height from the wall surface irrespective of the valve recessing depth in the wall, said device being comprised of an extension shaft fitted between the valve stem and the valve handle and of a protective bushing that encloses the extension shaft.

Presently, the stem of a recess-mounting valve employs, for instance, a construction in which the valve handle height from the wall remains dependent on the installation depth of piping within the wall. Such a construction is complemented with extension shaft elements of either 35 mm or 65 mm length which are necessary if the piping is installed to greater depth within the wall. In this manner, the valve handle can be adapted to a piping installed to 25...75 mm depth from the wall surface. However, the distance of the valve handle cannot be set to predetermined height from the wall, but only in 35 mm height steps. In a typical case the hot and cold water pipes are installed to run at different depths within the wall, thus forcing the valves to be recessed at different depths in the wall, whereby the valve handles, which are generally located adjacent to each other, become awkwardly outdistanced at different heights from the wall.

AT-C-331 085 discloses a coupling device for coupling a spindle of a valve member with a valve handle. The device includes an extension shaft which is trimmed to being installed to a desired length. Similar devices are known from DE-U-1 994 901 or DE-C-27 57 315.

It is an object of the present invention to provide for a valve stem adjustment device which can be mounted in a simpler way than it is possible in the prior art devices.

This object is achieved by a valve stem adjustment device as claimed in claim 1.

A further embodiment of the invention is characterized in that lengthwise the extension shaft has axially outwardly protruding wedge elements whose tips are provided with teeth onto which the protruding elements on the bottom of the wedge-shaped recesses of the handle's inner part lock. Thus, the handle stays firmly attached to the extension shaft.

Another further embodiment of the invention is characterized in that the handle part of the handle has axially inward oriented pegs which lock the handle part to the inner part in rotational direction and that the handle part has a bushing-shaped mounting extension which locks the handle part to the inner part axially by a snap-on joint. Also these mountings can be performed without tools. The only working tool needed is, for instance, a hack-saw for trimming the extension shaft according to the installation instructions.

In the following, the invention is examined with the help of an exemplifying embodiment by making reference to the attached drawings, in which
Figure 1 shows the length adjustment device according to the invention attached to a valve which is recessed by approx. 10 cm in the wall,
Figure 2 shows a control element attached to a valve which is mounted immediately flush with the wall surface, and
Figure 3 shows a section of the diagram of Fig. 1 along the line III-III.

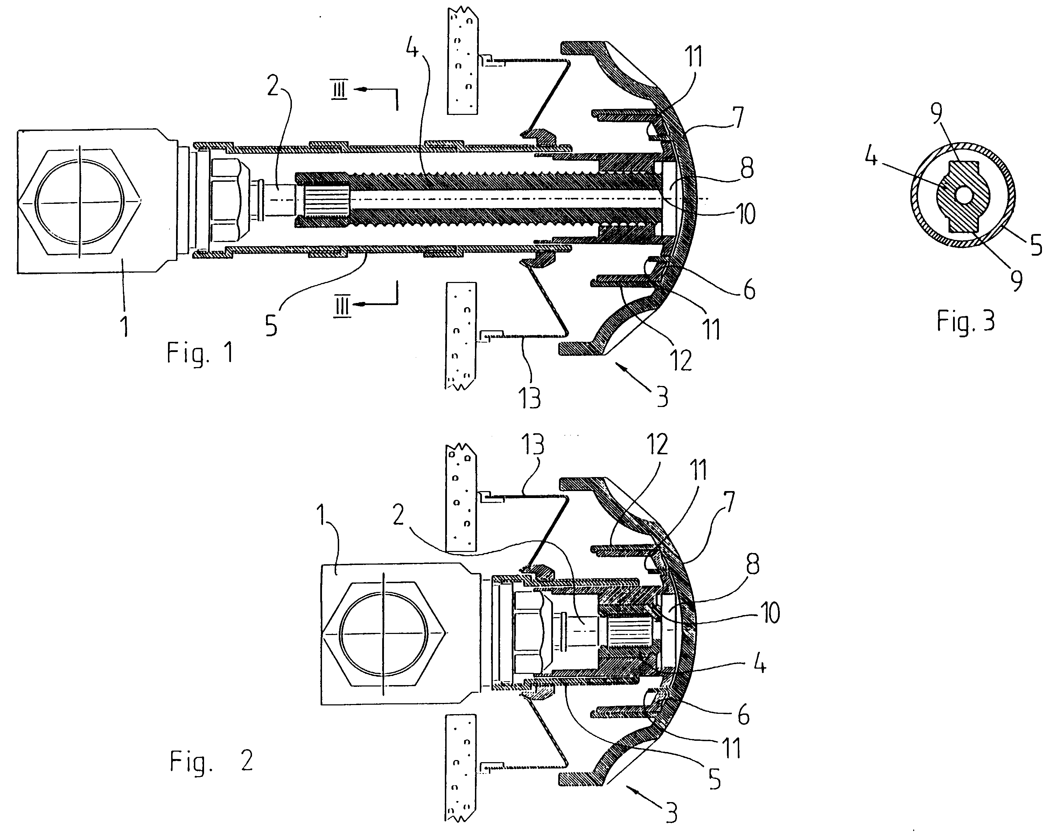

Said valve stem length adjustment device comprises an extension shaft 4 mounted between a valve 1, a valve stem 2 and a valve handle 3. The extension shaft is enclosed by a protective bushing 5. The extension shaft 4 is trimmed according to installation instructions using, e.g., a hack-saw so that the valve handle remains at a predetermined height from the wall surface. The extension shaft 4 is mountable by a push and snap-on joint onto the stem 2 of the valve 1. The handle 3 is comprised of an inner part 6 and a handle part 7 which can be pushed onto the inner part for the control of the valve. The inner part 6 is pushable onto the end of the extension shaft 4 so as to lock in both the rotational and axial directions onto the extension shaft. The inner part 6 has a collar 8 against which the end of the extension shaft 4 rests. The extension shaft 4 has outward protruding longitudinal wedge elements 9 whose tips are provided with teeth onto which the protruding elements 10 on the bottom of the wedge-shaped recesses of the handle's inner part lock. The handle part 7 has axially inward oriented pegs 11 which lock the handle part to the inner part 6 in the rotational direction. The handle part 7 also has a bushing-shaped mounting extension 12 which locks the handle part to the inner part axially by a snap-on joint. The protective bushing enclosing the extension shaft 4 is assembled from a multiple set of mutually connectable bushing elements, which can be connected by the threadedjoints in steps to form a protective bushing 5 of desired length. Onto the protective bushing is axially tightened a cover flange 13 which becomes resting flush with the wall. Fig. 1 shows a protective bushing comprised of three bushing elements, while Fig. 2 shows a protective bushing comprising only a single bushing element.

## Claims

1. A valve stem adjustment device suitable for setting a valve handle to a predetermined height from a wall surface irrespective of the valve recessing depth in the wall, said device being comprised of a valve handle (3), an extension shaft (4) fitted between the stem (2) of the valve (1) and the valve handle (3) and of a protective bushing (5) enclosing the extension shaft, and wherein the extension shaft (4) can be trimmed steplessly according to installation instructions so that the handle (3) of the valve (1) remains at a predetermined height from the wall surface when mounted to the end of the extension shaft (6)
**characterized** in that the valve handle (3) is comprised of an inner part (6) and, suitable for push-on mounting onto the inner part, a handle part (7) for the valve control and that said inner part (6) is pushable onto the end of the extension shaft (4) so as to lock both rotationally and axially to said extension shaft (4).

2. An adjustment device as defined in claim 1 **characterized** in that lengthwise the extension shaft (4) has axially outwardly protruding wedge elements (9) whose tips are provided with teeth onto which protruding elements (10) on the botton of wedge-shaped recesses of the handle's inner part (6) lock.

3. An adjustment device as defined in claim 1 or 2 **characterized** in that the handle part (7) has axially inward oriented pegs (11) which lock the handle part to the inner part in rotational direction and that the handle part (7) has a bushing-shaped mounting extension (12) which locks the handle part (7) to the inner part (6) axially by a snap-on joint.

## Patentansprüche

1. Einstellvorrichtung für eine Ventilspindel, die geeignet ist, um unabhängig von der Einbautiefe des Ventils in der Wand einen Ventilgriff bezüglich einer Wandfläche mit einem bestimmten Abstand einzustellen, wobei die Vorrichtung einen Ventilgriff (3), eine Verlängerungswelle (4), die zwischen der Spindel (2) des Ventils (1) und dem Ventilgriff (3) eingesetzt ist, und eine Schutzhülse (5) aufweist, die die Verlängerungswelle umgibt, und wobei die Verlängerungswelle (4) gemäß der Installationsanweisungen stufenlos eingestellt werden kann, so daß der Griff (3) des Ventils (1) bezüglich der Wandfläche einen vorbestimmten Abstand beibehält, wenn er am Ende der Verlängerungswelle (6) angebracht ist, **dadurch gekennzeichnet**, daß der Ventilgriff (3) einen inneren Abschnitt (6) und einen Griffabschnitt (7) zur Steuerung des Ventils aufweist, der geeignet ist, um zur Befestigung auf den inneren Abschnitt aufgedrückt zu werden, und daß der innere Abschnitt (6) auf das Ende der Verlängerungswelle (4) aufgedrückt werden kann, um mit der Verlängerungswelle (4) sowohl in Drehrichtung als auch in axialer Richtung fest verbunden zu sein.

2. Einstellvorrichtung nach Anspruch 1, **dadurch gekennzeichnet**, daß entlang der Verlängerungswelle (4) in axialer Richtung nach außen vorstehende Keilelemente (9) vorgesehen sind, an deren Endflächen Zähne vorgesehen sind, mit denen vorstehende Elemente (10) fest eingreifen, die am Boden keilförmiger Vertiefungen des inneren Abschnittes des Griffes vorgesehen sind.

3. Einstellvorrichtung nach Anspruch 1 oder 2, **dadurch gekennzeichnet**, daß der Griffabschnitt (7) in axialer Richtung nach innen zeigende Stifte (11) aufweist, mit denen der Griffabschnitt in Drehrichtung mit dem inneren Abschnitt verbunden ist, und daß der Griffabschnitt (7) einen hülsenförmigen Montagevorsprung (12) aufweist, mit dem der Griffabschnitt (7) durch eine Schnappverbindung in axialer Richtung mit dem inneren Abschnitt (6) verbunden ist.

## Revendications

1. Dispositif d'ajustement de tiges de vannes convenant pour placer la poignée d'une vanne à une hauteur de saillie prédéterminée sur la surface d'un mur quelle que soit la profondeur de retrait de la vanne dans le mur, ledit dispositif comprenant une poignée de vanne (3), un arbre prolongateur (4) monté entre la tige (2) de la vanne (1) et la poignée (3) de la vanne et un manchon protecteur (5) qui renferme l'arbre prolongateur et dans lequel l'arbre prolongateur (4) peut être taillé à la mesure sans palier, conformément aux instructions de montage, de manière que la poignée (3) de la vanne (1) reste à une hauteur de saillie prédéterminée par rapport à la surface du mur lorsqu'elle est montée sur l'extrémité de l'arbre prolongateur (6), caractérisé en ce que la poignée (3) de la vanne est composée d'une partie intérieure (6) et d'une partie de prise (7) appropriée pour être montée par emboîtement sur la partie intérieure, destinée à la commande de la vanne, et en ce que ladite partie intérieure (6) peut être emboîtée sur l'extrémité de l'arbre prolongateur (4) de manière à se verrouiller aussi bien en rotation que dans la direction axiale sur ledit arbre prolongateur (4).

2. Dispositif d'ajustement selon la revendication 1, caractérisé en ce que, dans la direction longitudinale, l'arbre prolongateur (4) a des éléments de clavettes (9) s'étendant axialement qui font saillie vers l'extérieur, dont les pointes sont munies de dents sur lesquelles se verrouillent les éléments (10) qui font saillie sur le fond des rainures de clavettes de la partie intérieure (6) de la poignée.

3. Dispositif d'ajustement selon la revendication 1 ou 2, caractérisé en ce que la partie de prise (7) de la poignée a des ergots (11) orientés axialement vers l'intérieur qui verrouillent la partie de prise par rapport à la partie intérieure dans le sens de la rotation et en ce que la partie de prise (7) possède un prolongateur de montage (12) en forme de manchon qui verrouille la partie de prise (7) par rapport à la partie intérieure (6) dans la direction axiale par un joint à encliquetage.
